# EUROPÄISCHE PATENTSCHRIFT

(11) **EP 4 028 210 B1**
(45) Veröffentlichungstag und Bekanntmachung des Hinweises auf die Patenterteilung: **12.02.2025**
(21) Anmeldenummer: 20754712.6
(22) Anmeldetag: 10.08.2020
(51) Int. Cl.: B23Q 1/66, B23Q 7/14, B21D 43/14

(54) **VORRICHTUNG ZUM SCHWENKEN, WENDEN UND WECHSELN VON WERKSTÜCK-PALETTEN, SOWIE HORIZONTAL-BEARBEITUNGSZENTRUM**
DEVICE FOR PIVOTING, TURNING AND EXCHANGING WORKPIECE PALLETS, AND HORIZONTAL MACHINING CENTER
DISPOSITIF DE PIVOTEMENT, DE RETOURNEMENT ET D'ÉCHANGE DE PALETTES DE PIÈCES, ET CENTRE D'USINAGE HORIZONTAL

(30) Priorität: 11.09.2019 DE 102019213870
(43) Veröffentlichungstag der Anmeldung: 20.07.2022
(73) Patentinhaber: Bavius Technologie GmbH, 88255 Baienfurt (DE)
(72) Erfinder: ZELL, Werner, 88436 Eberhardzell (DE)
(74) Vertreter: Grünecker Patent- und Rechtsanwälte PartG mbB
(86) Internationale Anmeldenummer: PCT/EP2020/072337
(87) Internationale Veröffentlichungsnummer: WO 2021/047836

(56) Entgegenhaltungen:
- EP-A2- 0 913 227
- WO-A1-2014/058397
- CN-A- 109 261 832
- DE-A1- 102017 217 878

## Beschreibung

Die Erfindung betrifft eine Vorrichtung gemäß Oberbegriff des Patentanspruchs 1 sowie ein Horizontal-Bearbeitungszentrum gemäß Oberbegriff des Patentanspruchs 10.

Solche als Palettenwechselautomation bezeichneten Vorrichtungen sind bekannt und werden an Horizontal-Bearbeitungszentren [www.bavius-technologie.com "5-axis machining centers for high performance machining", Typ HBZ AeroCell; technische Informationsschrift aus 11/2018.] beispielsweise für Flugzeugteile verwendet, um bearbeitete Werkstücke oder Rohlinge tragende Werkstück-Paletten zu manipulieren und zu wechseln. Die Schwenkarme werden synchron über Motoren und Getriebe zwischen einer bodenparallelen Lage und einer annährend vertikalen Lage mit einer oder zwei Rücken an Rücken an den Palettenträgern angedockten Paletten verschwenkt. Bei der Verschwenkung werden die Paletten oder wird eine einzelne Palette von an den Schwenkarmen angeordneten Motoren und Getrieben um die Wendeachse gewendet, um in lagerichtiger Position in das Horizontal-Bearbeitungszentrum eingebracht und auf einer bodenseitigen Ablage abgelegt, und durch Andocken oder Abdocken an bzw. von den Palettenträgern gewechselt. Als Motoren können Hydromotoren oder Elektromotoren verwendet werden. Die Getriebe umfassen im Regelfall Planetenradgetriebe. Da die Schwenkarme an sich separat schwenkbar sind und über die Steuerung der Motoren synchron geschwenkt werden, wobei die Steuerung über eine aufwendige Sensorik und Messeinrichtungen die jeweiligen Positionen der Schwenkarme und der Palettenträger ermittelt, kommt es bei einer Störung des Antriebs beispielsweise eines Schwenkarms zu sicherheits-kritischen Situationen bei der Handhabung der Palette oder Paletten.

In einem aus DE 10 2017 217 878 A1 bekannten Bearbeitungszentrum, die die Basis für den Oberbegriff des Anspruchs 1 bildet, werden Werkstücke tragende Paletten zwischen zwei parallelen Schwenkarmen gehalten, die synchron zueinander durch Elektromotoren und Getriebe an beiden Seiten angetrieben werden.

Bei einer aus CN 109261832 A bekannten Vorrichtung werden parallel zueinander schwenkbare Montierträger für Werkstücke über an den Außenseiten der Montierträger angeordnete Elektromotoren und Getriebe synchron angetrieben.

Bei einem aus EP 0 913 227 A2 bekannten Maschinenzentrum mit Werkzeugmaschinen wird ein Ladegerät zum Manipulieren im Arbeitsraum des Maschinenzentrums verwendet, das zwei synchron schwenkbare parallele Schwenkarme aufweist, die durch eine Welle drehfest miteinander gekuppelt sind. Der Antrieb beider Schwenkarme erfolgt an nur einer Seite des Ladegeräts über dort angeordnete Elektromotoren und Getriebe.

In einer aus WO 2014/058397 A1 bekannten Positionier-Vorrichtung für Werkstücke in Bearbeitungsrobotern sind zwei Indexierarme parallel zueinander um eine Indexierachse drehbar und durch eine Verbindungswelle drehfest miteinander gekuppelt. Die Indexierarme tragen drehbare Flansche zum Halten von Werkstücken. Beide Indexierarme werden über einen einzigen Servomotor und Getriebeeinrichtungen angetrieben, die nur an einer Seite der Vorrichtung platziert sind.

Der Erfindung liegt die Aufgabe zugrunde, eine Vorrichtung der eingangs genannten Art sowie ein Horizontal-Bearbeitungszentrum dahingehend zu verbessern, dass im Falle einer Störung an einer Seite kritische Betriebssituationen ausgeschlossen sind.

Die gestellte Aufgabe wird mit den Merkmalen des Anspruchs 1 und den Merkmalen des Anspruchs 10 gelöst.

Da die beiden Schwenkarme drehfest miteinander gekuppelt sind, übernimmt bei einer einseitigen Störung der Funktion der Antrieb des anderen Schwenkarms die Aufgabe an der gestörten Seite dahingehend, dass die Schwenkarme trotz der einseitigen Störung parallel gehalten werden. Dabei bieten Elektromotoren und kombinierte Schwenk-Winkel- und Planetenradgetriebe ideale Voraussetzungen, die zusätzliche Last der gestörten Seite problemlos zu tragen, beide Schwenkarme parallel zu schwenken und in der jeweiligen Position ohne gegenseitigen Versatz zu halten. Zur drehfesten Kupplung der beiden Schwenkarme ist eine den Abstand zwischen den Schwenkarmen überbrückende, zur Schwenkachse parallele Königswelle vorgesehen, die die Schwenkarme miteinander kuppelt. Gemäß Wikipedia ist eine Königswelle eine Antriebswelle einer Maschine, die eine Drehbewegung von einem Antriebsmotor an eine andere Stelle der Maschine überträgt und/oder die Last an der anderen Stelle aufnimmt.

In einer zweckmäßigen Ausführungsform ist die Königswelle ein an beiden Schwenkarmen, vorzugsweise an zueinander weisenden Innenflanken der Schwenkarme, verankertes Rohr, das aufgrund des Rohrquerschnittes ein ausreichend hohes Widerstandsmoment bietet, um im Falle einer einseitigen Störung die Last der gestörten Seite zu übertragen.

Aufgrund der drehfesten Kopplung der beiden Schwenkarme ist es zweckmäßig, dass die beiden Schwenk-Elektromotoren, die vorzugsweise Asynchronmotoren sein können, zum Schwenken der Schwenkarme um die Schwenkachse in einem Master/Slave-Modus betreibbar sind. In anderen Worten gibt der Master-Elektromotor den Bewegungsablauf vor, der am Slave-Elektromotor synchron geregelt wird.

In einer zweckmäßigen Ausführungsform ist das Rohr in bodennaher Lage der Schwenkarme gegenüber der Schwenkachse exzentrisch nach oben und/oder in Richtung vom freien Schwenkarmende weg versetzt positioniert. Trotz eines großdurchmessrigen Rohrs mit hohem Widerstandsmoment wird durch die Versetzung ein Freiraum um eine angedockte oder im Andocken begriffene Werkstück-Palette geschaffen, die das Personal nutzen kann.

In einer baulich einfachen Ausführungsform umfasst die Vorrichtung pro Schwenkarm eine wenigstens eine Anbaukonsole und Bodenstützen aufweisende Lagerbockwange, in der der Schwenkarm drehgelagert, und an der das Planetenradgetriebe des kombinierten Schwenk-Winkel-Planetenradgetriebes montiert ist. Die relativ hohen Lasten beim Manipulieren mit einer oder zwei Paletten werden über die Lagerbockwangen z. B. auf den Boden abgetragen.

Zweckmäßig ist das Planetenradgetriebe des kombinierten Wende-Winkel-Planetenradgetriebes an einer Außenflanke des Schwenkarms montiert, sodass zwischen den Schwenkarmen und den Palettenträgern genügend Freiraum zum An- und Abdocken der jeweiligen Palette vorliegt.

Dabei ist es zweckmäßig, wenn der jeweilige Schwenk-Elektromotor annähernd vertikal und der jeweilige Wende-Elektromotor annähernd parallel zur Erstreckung des Schwenkarms verbaut sind.

Speziell wegen der Verwendung von Elektromotoren und der drehfesten Kopplung der Schwenkarme kann eine aufwendige und fehleranfällige Sensorik oder Messvorrichtung zur Überwachung der Bewegungen weggelassen werden, indem die Schwenkarme um die Schwenkachse und die Palettenträger bzw. Paletten um die Wendeachse jeweils mechanisch auf Festanschlag bringbar und durch Abgreifen der Motorleistung in der jeweiligen Endposition stillsetzbar sind. Die Motorleistung kann über einen Spannungsanstieg oder Stromanstieg abgegriffen werden und gibt eine präzise Aussage zum Erreichen des jeweiligen Festanschlags.

Zweckmäßig ist die Vorrichtung eine mit den Anbaukonsolen abnehmbar an dem Horizontal-Bearbeitungszentrum festlegbare vormontierbare Baueinheit, d. h. eine sogenannte Paletten-Wechselautomation.

Das mit der Vorrichtung ausgestattete Horizontal-Bearbeitungszentrum zeichnet sich durch gesteigerte Betriebssicherheit und eine einfachere Steuerung aus, da trotz einer einseitigen Störung bei einem Schwenkarm eine kritische Betriebssituation vermieden wird.

Eine Ausführungsform des Erfindungsgegenstandes wird anhand der Zeichnung erläutert. Es zeigen:
- Fig. 1: eine Perspektivansicht eines Horizontal-Bearbeitungszentrums mit einer angebauten Vorrichtung zum Schwenken, Wenden und Wechseln von Werkstück-Paletten, und
- Fig. 2: einen vergrößerten Ausschnitt aus Fig. 1.

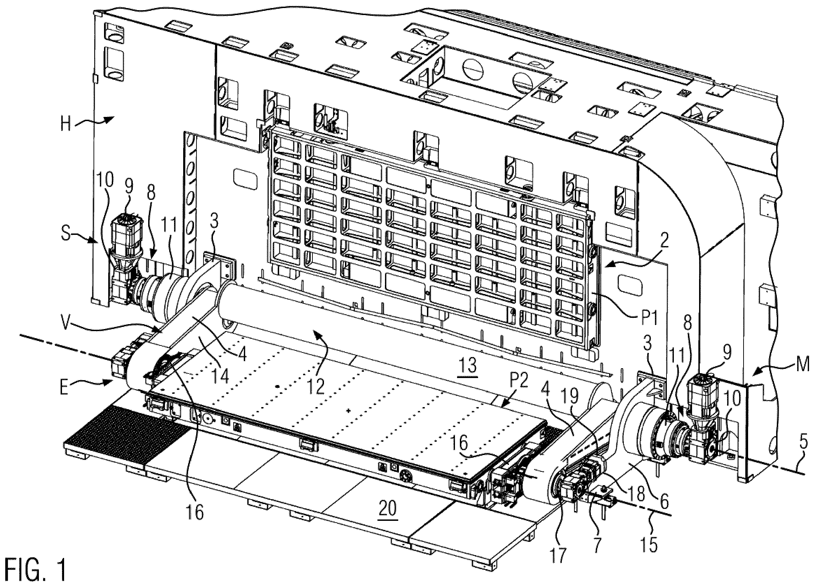

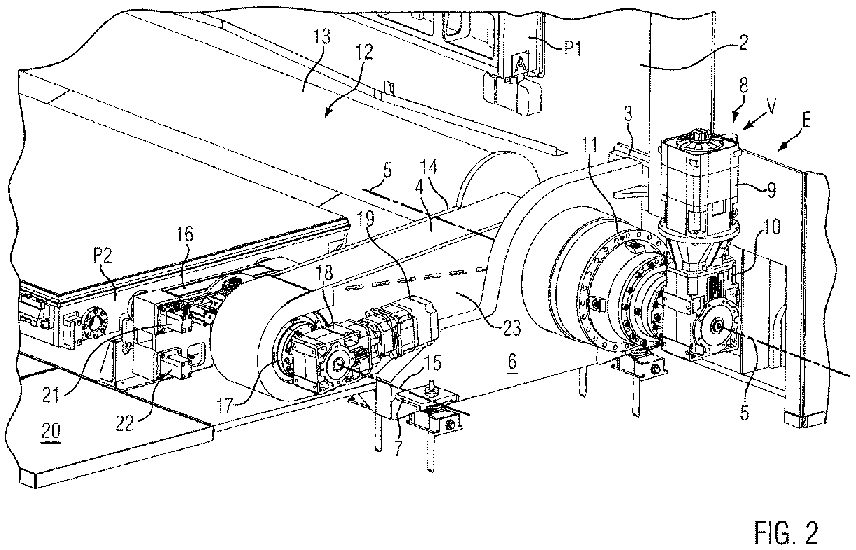

Fig. 1 und 2 zeigen eine Vorrichtung V zum Schwenken, Wenden und Wechseln von Werkstück-Paletten P1, P2, als vorfertigbare Baueinheit E (Palettenwechsel-Automation) angebaut oder angesetzt an ein Horizontal-Bearbeitungszentrum H, beispielsweise zum spanenden Bearbeiten von Werkstücken W für die Flugzeugindustrie.

Fig. 1 zeigt eine Gesamtansicht des Horizontal-Bearbeitungszentrums H, in dessen Bearbeitungsfront 2 bereits eine Palette P1 in einer senkrechten Position zur Bearbeitung festgespannt ist. Vor dem Horizontal-Bearbeitungszentrum H ist eine bodenseitige Paletten-Ablage 20 vorgesehen, auf der eine zweite Palette P2 in horizontaler Position ruht, auf deren nach oben weisender Rüstseite ein Werkstück W oder mehrere Werkstücke positioniert ist bzw. sind, das bzw. die z. B. durch Unterdruck auf der Rüstseite der Palette P2 fixiert ist. Abhängig davon, ob die zweite Palette P2 bei einem Palettenwechsel aus der Bearbeitungsposition entnommen und zum Abtransport bereitgestellt ist, oder zu einem Wechsel gegen die erste Palette P1 in die Bearbeitungsposition gebracht wird, trägt die zweite Palette P2 ein bearbeitetes Werkstück W oder einen Rohling.

Die Vorrichtung V weist zwei Lagerbockwangen 6 auf, die z. B mit Anbaukonsolen 3 an der Front 2 des Horizontal-Bearbeitungszentrums H montiert sind. Jede Lagerbockwange 6 kann wenigstens eine Bodenstütze 7 aufweisen. In jeder Lagerbockwange 6 ist ein einseitig auskragender Schwenkarm 4 drehbar gelagert, der mittels einer Antriebseinheit 8 um eine im Wesentlichen bodenparallele Schwenkachse 5 zwischen der bodennahen, abgesenkten und in den Fig. 1 und 2 gezeigten Position und einer im Wesentlichen vertikalen, zur Front 2 des Horizontal-Bearbeitungszentrums H hochgeschwenkten Position verstellbar ist. Der Antrieb 8 umfasst einen vertikal verbauten Elektromotor 9, und ein kombiniertes Winkel- und Planetenradgetriebe mit einem Winkelgetriebe 10 und einem an die Lagebockwange 6 außen angeflanschten Planetenradgetriebe 11. Die Vorrichtung V kann auch nur vor dem Zentrum H auf dem Boden verankert sein.

Die beiden Schwenkarme 4, die zueinander synchron und parallel und beabstandet schwenkbar sind, sind über eine den Abstand zwischen den Schwenkarmen 4 überbrückende Königswelle 12 drehfest gekuppelt. In der gezeigten Ausführungsform ist die Königswelle 12 ein Rohr 13, dessen beide Enden an zueinander weisenden Flanken 14 der Schwenkarme 4 verankert sind. Optional ist das Rohr 13 bzw. die Königswelle 12 gegenüber der Schwenkachse 5 exzentrisch versetzt positioniert, derart, dass das Rohr 13 in den gezeigten bodennahen Positionen der Schwenkarme 4 gegenüber der Schwenkachse 5 nach oben und/oder in Richtung zur Front 2 des Horizontal-Bearbeitungszentrums H versetzt ist. Diese Versetzung schafft Freiraum um die zweite Palette P2, beispielsweise nutzbar vom Personal bei Arbeiten an der zweiten Palette P2.

An den freien Schwenkarmenden ist jeweils ein blockförmiger Palettenträger 16 um eine zur Schwenkachse 5 parallele Wendeachse 15 drehbar, der über einen Elektromotor 19, ein Winkelgetriebe 18 und ein am Schwenkarm 4 angeflanschtes Planetenradgetriebe 17 beispielsweise über 180° wendbar ist. Die zweite Palette P2 ist bereits an beiden Palettenträgern 16 angedockt, beispielsweise über nicht gezeigte Stempel der Palettenträger 16, die in Aufnahmebohrungen an den Paletten-Stirnseiten durch Pneumatik- oder Hydraulikzylinder-Antriebe 21, 22 (Fig. 2) einfahrbar sind. Der Elektromotor 19 und das Winkelgetriebe 18 sind in etwa parallel zur Erstreckungsrichtung des Schwenkarms 4 an dessen außenliegender Flanke 23 verbaut. Die Antriebe 21, 22 für die Stempel sind paarweise unabhängig voneinander betätigbar. Die zweite Palette P2 ist über die in Fig. 2 obenliegenden Antriebe 21 angedockt, während die unteren Antriebe 22 in dieser Betriebsphase nicht aktiviert sind, sondern erst später zum Palettenwechsel bzw. Andocken der ersten Palette P1 benutzt werden. Mit den Palettenträgern 16 kann somit eine einzelne Palette P2, wie gezeigt, angedockt werden, oder (nicht gezeigt) beide Paletten P1, P2, die dann Rücken an Rücken in den Palettenträgern 16 angedockt sind. Zum Fixieren des jeweiligen Werkstücks auf der Palette P1, P2 weist die in den Fig. 1 und 2 gezeigte Rüstseite der zweiten Palette P2 z. B. großflächig verteilte Saugöffnungen auf, durch welche das Werkstück mit Vakuum beaufschlagt und fixiert wird (nicht gezeigt). Die Versorgung der Palette P2 mit Unterdruck, und anderen Arbeitsmedien, wie Druckluft oder Hydraulik oder elektrischen Signalen, erfolgt über die Schwenkarme 4 zu den Palettenträgern 16 und bezüglich des Unterdrucks von diesen z. B. in die Palette P2.

Die Elektromotoren 9 der Antriebe 8 und die kombinierten Winkel- und Planetenradgetriebe sind so stark ausgelegt, dass bei einer Störung im Antrieb 8 an einer Seite der andere Antrieb 8 die zusätzliche Last aufzubringen vermag und allein für die konkrete Schwenkung sorgt, sodass sich die Schwenkarme 4 trotz der Störung synchron bewegen oder synchron und parallel gehalten werden. Dies ist ein wichtiger Sicherheitsaspekt, da eine solche Störung ohne die drehfeste Kopplung der Schwenkarme 4 zu außerordentlich kritischen Betriebssituationen führen könnte.

Aufgrund der drehfesten Kupplung der Schwenkarme 4 ist es zweckmäßig, die Steuerung der Schwenkbewegungen in einem Modus auszuführen, in welchem ein Elektromotor 9 als Master fungiert, der andere Elektromotor 9 an der gegenüberliegenden Seite hingegen als Slave. Der Slave-Elektromotor 9 wird nach Maßgabe der Bewegung des Master-Elektromotors 9 elektronisch so geregelt, dass bei nicht gestörtem Betrieb die beiden Elektromotoren 9 die Schwenkarme 4 mit einer oder zwei Paletten P1, P2 jederzeit synchron und parallel verschwenken.

Die Königswelle 12 könnte auch als massives Profil ausgebildet sein. Bei dem als Königswelle 12 gezeigten Rohr in den Fig. 1 und 2 sind Endplatten des Rohres 13 mit den zueinander weisenden Flanken 14 der Schwenkarme 4 beispielsweise verschraubt oder verschweißt.

Ein Palettenwechsel läuft beispielsweise wie folgt ab:
Das Werkstück auf der ersten Palette P1 ist gerade in Bearbeitung. Die zweite Palette P2 ist mit einem Rohling bestückt und bereits an den Palettenträgern 16 angedockt. Nach Ende der Bearbeitung oder während der Bearbeitung des Werkstücks auf der Palette P1, die im Horizontal-Bearbeitungszentrum H festgespannt ist und aus dem Horizontal-Bearbeitungszentrum H mit Energie (Unterdruck, Pneumatik, Hydraulik und elektrische Signale) versorgt wird, wird die zweite Palette P2 aus der gezeigten horizontalen Lage mittels der Schwenkarme 4 um die Schwenkachse 5 um beispielsweise etwa 45° hochgeschwenkt, und dann um die Wendeachse 15 entgegen dem Uhrzeigersinn gewendet, sodass sie schließlich in vertikaler Position der Schwenkarme 4 mit ihrer Rückseite gegen die Rückseite der ersten Palette P1 bewegt wird. Die in Fig. 2 unteren Antriebe 22 docken die erste Palette P1 an die Palettenträger 16 an, ehe die erste Palette P1 im Horizontal-Bearbeitungszentrum H freigegeben wird. Dabei werden auch die Energieversorgungen in den Palettenträgern 16 mit der ersten Palette P1 verbunden. In der Folge werden beide Paletten P1, P2 durch Absenken der Schwenkarme 4 um beispielsweise etwa 45° vor der Front 2 des Horizontal-Bearbeitungszentrums H weg bewegt und gewendet, sodass nun die Rüstseite der zweiten Palette P2 zum Horizontal-Bearbeitungszentrum H weist, ehe die Schwenkarme 4 wieder nach oben geschwenkt werden und die zweite Palette P2 in die Bearbeitungsposition bringen, in der nun die zweite Palette P2 im Horizontal-Bearbeitungszentrum festgespannt wird und die Palettenträger 16 über die Antriebe 21 von der zweiten Palette P2 gelöst werden. Durch Absenken der Schwenkarme 4 und Wenden der ersten Palette P1 wird diese schließlich auf der Bodenauflage 20 mit nach oben weisender Rüstseite abgelegt. In anderen Worten ermöglicht die Vorrichtung V die Handhabung wahlweise nur einer Palette P1 oder P2 oder die gleichzeitige Handhabung zweier Paletten P1, P2.

Durch die Verwendung der Elektromotoren 9, 19 zum Schwenken und Wenden kann eine aufwendige Sensorik oder Messvorrichtung zur Überwachung der Bewegungen und Positionen der Paletten P1, P2, der Schwenkarme 4, und der Palettenträger 16 entfallen, und kann jeweils mechanisch auf Festanschlag gefahren werden, wobei die Leistung der Elektromotoren 9, 19 dahingehend überwacht wird, dass bei Erreichen eines Festanschlags der steigende Motorstrom oder die sich ändernde Spannung abgegriffen und die Bewegung stillgesetzt und die erreichte Position gehalten wird.

## Patentansprüche

1. Vorrichtung (V) zum Schwenken, Wenden und Wechseln von Werkstück-Paletten (P1, P2), insbesondere an einem Horizontal-Bearbeitungszentrum (H), mit zwei parallelen, beabstandeten und jeweils mit einem Palettenträger (16) bestückbaren Schwenkarmen (4), deren jeder von einem Elektromotor (9) und einem Getriebe um eine im Wesentlichen horizontale, bodenparallele Schwenkachse (5) parallel zu dem anderen Schwenkarm (4) schwenkbar ist, wobei jeder Palettenträger (16) am Schwenkarm (4) parallel zu dem anderen Palettenträger (16) von einem Elektromotor (19) und einem Getriebe um eine zur Schwenkachse (5) parallele Wendeachse (15) wendbar ist, **dadurch gekennzeichnet, dass** die Getriebe kombinierte Winkel-Planetenradgetriebe (10, 11; 17, 18) und die von den beiden Elektromotoren (9) schwenkbaren Schwenkarme (4) um die Schwenkachse (5) über eine den Abstand zwischen den Schwenkarmen (4) überbrückende, zur Schwenkachse (5) parallele Königswelle (12) drehfest miteinander gekuppelt sind.

2. Vorrichtung nach Anspruch 1, **dadurch gekennzeichnet, dass** die Königswelle (12) ein an beiden Schwenkarmen (4), vorzugsweise an zueinander weisenden Innenflanken (14) der Schwenkarme (4), verankertes Rohr (13) ist.

3. Vorrichtung nach Anspruch 1, **dadurch gekennzeichnet, dass** die beiden Elektromotoren (9), vorzugsweise Asynchronmotoren, zum Schwenken der Schwenkarme (4) um die Schwenkachse (5) in einem Master/Slave-Modus betreibbar sind.

4. Vorrichtung nach Anspruch 2, **dadurch gekennzeichnet, dass** das Rohr (13) in bodennaher Lage der Schwenkarme (4) gegenüber der Schwenkachse (5) exzentrisch nach oben und/oder in Richtung vom freien Schwenkarmende weg versetzt positioniert ist.

5. Vorrichtung nach Anspruch 1, **dadurch gekennzeichnet, dass** die Vorrichtung (V) pro Schwenkarm (4) eine wenigstens eine Anbaukonsole (3) und Bodenstützen (7) aufweisende Lagerbockwange (6) umfasst, in der der Schwenkarm (4) drehgelagert und an der außen das Planetenradgetriebe (11) des kombinierten Schwenk-Winkel-Planetenradgetriebes (10, 11) montiert ist.

6. Vorrichtung nach Anspruch 1, **dadurch gekennzeichnet, dass** das Planetenradgetriebe des kombinierten Wende-Winkel-Planetenradgetriebes (17, 18) an einer Außenflanke (23) des Schwenkarms (4) montiert ist.

7. Vorrichtung nach Anspruch 5 4 , **dadurch gekennzeichnet, dass** der Schwenk-Elektromotor (9) an die Lagerbockwange (6) annähernd vertikal und der Wende-Elektromotor (19) am Schwenkarm (4) annähernd parallel zur Erstreckung des Schwenkarms (4) verbaut sind.

8. Vorrichtung nach Anspruch 1, **dadurch gekennzeichnet, dass** die Schwenkarme (4) um die Schwenkachse (5) und die Palettenträger (16) um die Wendeachse (15) jeweils mechanisch auf Festanschlag fahrbar und mit Abgreifen der Motorleistung stillsetzbar sind.

9. Vorrichtung nach wenigstens einem der vorhergehenden Ansprüche, **dadurch gekennzeichnet, dass** die Vorrichtung (V) eine mit den Anbaukonsolen (3) abnehmbar an und/oder auf dem Boden vor dem Horizontal-Bearbeitungszentrum (H) festlegbare, vormontierbare Baueinheit (E) als sogenannte Paletten-Wechselautomation ist.

10. Horizontal-Bearbeitungszentrum (H) zum spanenden Bearbeiten von auf schwenk- und wendbaren sowie wechselbaren Werkstück-Paletten (P1, P2) fixierten Werkstücken, **dadurch gekennzeichnet, dass** das Horizontal-Bearbeitungszentrum (H) mit einer Vorrichtung (V) gemäß wenigstens einem der Ansprüche 1 bis 9 ausgestattet ist.

## Claims

1. Device (V) for swiveling, turning and changing workpiece pallets (P1, P2), in particular on a horizontal machining center (H), with two parallel, spaced swivel arms (4) that can each be fitted with a pallet carrier (16) each of which can be swivelled parallel to the other swivel arm (4) by an electric motor (9) and a gear about a substantially horizontal, ground-parallel swivel axis (5), each pallet carrier (16) on the swivel arm (4) parallel to the other pallet carrier (16) can be rotated by an electric motor (19) and a gear about a turning axis (15) parallel to the swivel axis (5), **characterized in that** the gears are combined bevel planetary gears (10, 11; 17, 18) and the swivel arms (4) which are rotatable by the electric motors (9) about the swivel axis (5) are coupled torque proof to each other via a king shaft (12) which bridges the distance between the swivel arms (4) and is parallel to the swivel axis (5).

2. Device according to claim 1, **characterized in that** the king shaft (12) is a tube (13) anchored on both swivel arms (4), preferably on mutually facing inner flanks (14) of the swivel arms (4).

3. Device according to claim 1, **characterized in that** the two electric motors (9), preferably asynchronous motors, can be operated in a master/slave mode, to swivel the swivel arms (4) about the swivel axis (5).

4. Device according to claim 2, **characterized in that** the tube (13) is positioned eccentrically upwards and/or offset in the direction away from the free end of the swivel arm relative to the swivel axis (5) when the swivel arms (4) are in a position close to the ground.

5. Device according to claim 1, **characterized in that** the device (V) has a bearing block cheek (6) per swivel arm (4), the bearing block cheek (6) comprising at least one mounting bracket (3) and floor supports (7), in which bearing block cheek (6) the swivel arm (4) is rotatably mounted and on which the planetary gear (11) of the combined swivel bevel planetary gear (10, 11) is mounted on the outside.

6. Device according to claim 1, **characterized in that** the planetary gear of the combined turning bevel planetary gear (17, 18) is mounted on an outer flank (23) of the swivel arm (4).

7. Device according to claim 5, **characterized in that** the swivel arm electric motor (9) is installed on the bearing block cheek (6) approximately vertically and the pallet carrier turning electric motor (19) is installed on the swivel arm (4) approximately parallel to the extension of the swivel arm (4).

8. Device according to claim 1, **characterized in that** the swivel arms (4) about the swivel axis (5) and the pallet carriers (16) about the turning axis (15) can each be moved mechanically to a fixed stop and can be stopped by tapping the motor power.

9. Device according at least one of the preceding claims, **characterized in that** the device (V) is a pre-assembled structural unit (E) as a so-called pallet change automation that can be removed with the mounting brackets (3) and/or fixed on the floor in front of the horizontal machining center (H).

10. Horizontal machining center (H) for machining workpieces fixed on swivable, turnable and changeable workpiece pallets (P1, P2), **characterized in that** the horizontal machining center (H) is equipped with a device (V) according to at least one of the claims 1 to 9.

## Revendications

1. Dispositif (V) pour faire pivoter, tourner et changer des palettes de pièces à usiner (P1, P2), en particulier sur un centre d'usinage horizontal (H), comprenant deux bras pivotants parallèles (4), espacés et pouvant être équipés chacun d'un support de palette (16), dont chacun peut pivoter autour d'un axe de pivotement (5) sensiblement horizontal, parallèle au sol, par l'intermédiaire d'un moteur électrique (9) et d'une transmission, parallèlement à l'autre bras pivotant (4), chaque support de palette (16) sur le bras pivotant (4) parallèlement à l'autre support de palette (16) pouvant pivoter par l'intermédiaire d'un moteur électrique (19) et d'une transmission autour d'un axe de rotation (15) parallèle à l'axe de pivotement (5), **caractérisé en ce que** les transmissions sont des engrenages planétaires angulaires (10, 11 ; 17, 18) combinés, et les bras pivotants (4) pouvant pivoter par l'intermédiaire des deux moteurs électriques (9) autour de l'axe de pivotement (5) sont couplés ensemble de manière solidaire en rotation par un arbre maître (12) parallèle à l'axe de pivotement (5) couvrant une distance entre les bras pivotants (4).

2. Dispositif selon la revendication 1, **caractérisé en ce que** l'arbre maître (12) est un tube (13) ancré aux deux bras pivotants (4), de préférence aux flancs intérieurs (14) tournés l'un vers l'autre des bras pivotants (4).

3. Dispositif selon la revendication 1, **caractérisé en ce que** les deux moteurs électriques (9), de préférence des moteurs asynchrones, peuvent être utilisés pour faire pivoter les bras pivotants (4) autour de l'axe de pivotement (5) dans un mode maître/esclave.

4. Dispositif selon la revendication 2, **caractérisé en ce que** le tube (13) est positionné de manière excentrée vers le haut et/ou décalé dans la direction éloignée de l'extrémité libre du bras pivotant dans la position proche du sol des bras pivotants (4) par rapport à l'axe de pivotement (5).

5. Dispositif selon la revendication 1, **caractérisé en ce que** le dispositif (V) comprend, par bras pivotant (4), une flasque de support de palier (6) présentant au moins une console de montage (3) et des supports de sol (7), dans laquelle le bras pivotant (4) est monté en rotation et sur laquelle est monté à l'extérieur l'engrenage planétaire (11) de l'engrenage planétaire combiné à angle de pivotement (10, 11).

6. Dispositif selon la revendication 1, **caractérisé en ce que** l'engrenage planétaire de l'engrenage planétaire à angle de rotation combiné (17, 18) est monté sur un flanc extérieur (23) du bras pivotant (4).

7. Dispositif selon la revendication 5, **caractérisé en ce que** le moteur électrique pivotant (9) est monté sur la flasque de support de palier (6) approximativement verticalement, et le moteur électrique de rotation(19) est monté sur le bras pivotant (4) approximativement parallèlement à l'extension du bras pivotant (4).

8. Dispositif selon la revendication 1, **caractérisé en ce que** les bras pivotants (4) peuvent être déplacés autour de l'axe de pivotement (5) et les supports de palette (16) autour de l'axe de rotation (15) respectivement mécaniquement sur une butée fixe, et peuvent être arrêtés avec prélèvement de la puissance du moteur.

9. Dispositif selon au moins l'une des revendications précédentes, **caractérisé en ce que** le dispositif (V) est une unité de construction (E) prémontée, pouvant être fixée de manière amovible avec les consoles de montage (3) au niveau de et/ou sur le sol devant le centre d'usinage horizontal (H), en tant qu'automatisation de changement de palette.

10. Centre d'usinage horizontal (H) pour un usinage par enlèvement de copeaux de pièces à usiner fixées sur des palettes de pièces à usiner (P1, P2) pivotantes, pouvant être tournées et changées, **caractérisé en ce que** le centre d'usinage horizontal (H) est équipé d'un dispositif (V) selon au moins l'une des revendications 1 à 9.
